# EUROPÄISCHE PATENTANMELDUNG

(11) **EP 3 393 022 A1**
(43) Veröffentlichungstag der Anmeldung: **24.10.2018**
(21) Anmeldenummer: 17167576.2
(22) Anmeldetag: 21.04.2017
(51) Int. Cl.: H02K 41/03, H02K 21/40

(54) **LINEARE ELEKTRISCHE MASCHINE**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)

(57) **Zusammenfassung**

Die Erfindung betrifft ein Primärteil (3) einer linearen elektrischen Maschine (1) und eine elektrischen Maschine (1) mit einem derartigen Primärteil (3). Das Primärteil (3) umfasst ein erstes Aktivteil (7) mit mehreren entlang eines Fahrwegs (11) hintereinander angeordneten Elektromagneten (13), die jeweils eine Spulenwicklung (15) einer elektrischen Spule aufweisen, und ein zweites Aktivteil (9) mit mehreren entlang des Fahrwegs (11) hintereinander angeordneten Permanentmagneten (21). Die beiden Aktivteile (7, 9) sind sich gegenüberliegend und voneinander beabstandet angeordnet.

## Beschreibung

Die Erfindung betrifft ein Primärteil einer linearen elektrischen Maschine und eine lineare elektrische Maschine.

Lineare elektrische Maschinen weisen ein Primärteil und ein Sekundärteil auf, die sich gegenüber stehen, durch einen Luftspalt voneinander beabstandet sind und relativ zueinander bewegbar sind. Die Erfindung betrifft lineare elektrische Maschinen, bei denen nur das Primärteil aktive Mittel zur Erzeugung magnetischer Felder aufweist, während das Sekundärteil frei von derartigen Mitteln ist. Die aktiven Mittel des Primärteils sind Elektromagneten und Permanentmagneten. Derartige lineare elektrische Maschinen haben gegenüber linearen elektrischen Maschinen, bei denen sowohl das Primärteil als auch das Sekundärteil aktive Mittel zur Erzeugung magnetischer Felder aufweisen, den Vorteil, dass insbesondere bei einem langen Fahrweg ein deutlich geringerer Magnetbedarf besteht, da die Magneten nicht entlang des gesamten Fahrwegs verbaut werden.

Der Erfindung liegt die Aufgabe zugrunde, ein verbessertes Primärteil einer linearen elektrischen Maschine und eine verbesserte lineare elektrische Maschine anzugeben.

Die Aufgabe wird erfindungsgemäß hinsichtlich des Primärteils durch die Merkmale des Anspruchs 1 und hinsichtlich der linearen elektrischen Maschine durch die Merkmale des Anspruchs 7 gelöst.

Vorteilhafte Ausgestaltungen der Erfindung sind Gegenstand der Unteransprüche.

Ein erfindungsgemäßes Primärteil einer linearen elektrischen Maschine umfasst ein erstes Aktivteil mit mehreren entlang eines Fahrwegs hintereinander angeordneten Elektromagneten, die jeweils eine Spulenwicklung einer elektrischen Spule aufweisen, und ein zweites Aktivteil mit mehreren entlang des Fahrwegs hintereinander angeordneten Permanentmagneten. Die beiden Aktivteile sind sich gegenüberliegend und voneinander beabstandet angeordnet.

Ein erfindungsgemäßes Primärteil weist also zwei voneinander beabstandete Aktivteile auf. Dabei weist das erste Aktivteil die Elektromagneten des Primärteils auf und das zweite Aktivteil weist die Permanentmagneten des Primärteils auf. Durch die Aufteilung der Elektromagneten und der Permanentmagneten auf zwei separate Aktivteile reduzieren die Permanentmagneten nicht den Bauraum für die Spulenwicklungen der Elektromagneten. Ferner werden die Permanentmagneten durch die Elektromagneten nicht wesentlich erwärmt, da sie nicht in demselben Aktivteil nahe an den Elektromagneten sondern von den Elektromagneten beabstandet in einem separaten Aktivteil angeordnet sind. Dadurch kann gegenüber einem Primärteil, bei dem die Elektromagneten und die Permanentmagneten in demselben Aktivteil angeordnet sind, vorteilhaft der Wirkungsgrad der elektrischen Maschine verbessert werden, indem einerseits der Bauraum für die Spulenwicklungen der Permanentmagneten erhöht wird und dadurch der Leiterquerschnitt der Spulenwicklungen vergrößert werden kann und andererseits durch eine Erwärmung der Permanentmagneten entstehende Verluste reduziert werden.

Eine Ausgestaltung der Erfindung sieht vor, dass das erste Aktivteil ein Aktivteilblechpaket mit Nuten aufweist, wobei durch jede Nut wenigstens eine Spulenwicklung eines Elektromagneten verläuft. Dadurch wird vorteilhaft die Feldstärke des von den Elektromagneten erzeugten Magnetfelds erhöht.

Eine weitere Ausgestaltung der Erfindung sieht vor, dass je zwei einander benachbarte Permanentmagneten des zweiten Aktivteils einander entgegengesetzte magnetische Polungen aufweisen. Dadurch kann vorteilhaft der magnetische Antrieb durch die Permanentmagneten realisiert werden.

Eine weitere Ausgestaltung der Erfindung sieht vor, dass jedem Elektromagneten des ersten Aktivteils zwei einander benachbarte Permanentmagneten des zweiten Aktivteils gegenüber liegen. Dadurch wird vorteilhaft die Anordnung der Permanentmagneten des zweiten Aktivteils der Anordnung der Elektromagneten des ersten Aktivteils angepasst.

Eine weitere Ausgestaltung der Erfindung sieht vor, dass das erste Aktivteil zwölf Elektromagneten aufweist. Die Anordnung von zwölf Elektromagneten in dem ersten Aktivteil hat sich überraschend als besonders effektiv herausgestellt.

Eine weitere Ausgestaltung der Erfindung sieht vor, dass die Elektromagneten des ersten Aktivteils mit einem dreiphasigen elektrischen Stromsystem gespeist werden, wobei jeder Elektromagnet einer Phase des Stromsystems zugeordnet ist. Dies ermöglicht vorteilhaft die Verwendung eines dreiphasigen elektrischen Stromsystems zum Betrieb der elektrischen Maschine.

Eine erfindungsgemäße lineare elektrische Maschine umfasst ein erfindungsgemäßes Primärteil und ein zwischen den beiden Aktivteilen des Primärteils und parallel zu den beiden Aktivteilen des Primärteils angeordnetes Sekundärteil. Das Sekundärteil weist mehrere nichtmagnetische Bereiche, die jeweils aus einem nichtmagnetischen Material gefertigt sind, und mehrere magnetische Bereiche, die jeweils zumindest teilweise aus einem magnetischen Material gefertigt sind, auf. Entlang des Fahrwegs sind abwechselnd nichtmagnetische Bereiche und magnetische Bereiche angeordnet.

Vorteile einer erfindungsgemäßen linearen elektrischen Maschine ergeben sich aus den oben genannten Vorteilen eines erfindungsgemäßen Primärteils. Außerdem reduziert die Anordnung des Sekundärteils zwischen den beiden Aktivteilen des Primärteils vorteilhaft die Normalkräfte auf die Führung eines Fahrschlittens, der von der elektrischen Maschine angetrieben wird.

Eine Ausgestaltung der elektrischen Maschine sieht vor, dass die nichtmagnetischen Bereiche des Sekundärteils aus einem keramischen Material oder aus einem faserverstärkten Kunststoff gefertigt sind. Keramisches Material und faserverstärkte Kunststoffe sind aufgrund ihrer magnetischen und mechanischen Eigenschaften besonders zur Fertigung der nichtmagnetischen Bereiche des Sekundärteils geeignet.

Eine weitere Ausgestaltung der elektrischen Maschine sieht vor, dass das magnetische Material der magnetischen Bereiche des Sekundärteils jeweils ein weichmagnetisches Material ist. Besonders bevorzugt weisen die magnetischen Bereiche des Sekundärteils jeweils ein aus Elektroblechen bestehendes Blechpaket auf. Das Sekundärteil weist insbesondere keine aktiven Mittel zur Erzeugung magnetischer Felder sondern lediglich magnetische Bereiche zur Führung magnetischer Felder durch weichmagnetisches Material auf. Wie eingangs bereits erwähnt wurde, resultiert daraus insbesondere bei einem langen Fahrweg ein deutlich geringerer Magnetbedarf, da Magneten nicht entlang des gesamten Fahrwegs verbaut werden. Die Ausführung der magnetischen Bereiche des Sekundärteils mit jeweils einem aus Elektroblechen bestehenden Blechpaket vermeidet bzw. reduziert vorteilhaft Wirbelstromverluste in dem Sekundärteil.

Eine weitere Ausgestaltung der elektrischen Maschine sieht vor, dass das Sekundärteil ortsfest angeordnet ist und die Aktivteile des Primärteils bewegbar angeordnet sind. Alternativ dazu können die Aktivteile des Primärteils ortsfest angeordnet und das Sekundärteil bewegbar angeordnet sein. Welche dieser Ausgestaltungen vorteilhafter ist, hängt von der jeweiligen Verwendung der elektrischen Maschine ab.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Schnittdarstellung einer linearen elektrischen Maschine,
FIG 2 eine perspektivische Darstellung der in Figur 1 gezeigten linearen elektrischen Maschine,
FIG 3 eine Draufsicht auf ein Sekundärteil einer linearen elektrischen Maschine,
FIG 4 eine Schnittdarstellung eines ersten Aktivteils einer linearen elektrischen Maschine,
FIG 5 eine Schnittdarstellung eines ersten Ausführungsbeispiels einer Verfahrvorrichtung,
FIG 6 eine Schnittdarstellung eines zweiten Ausführungsbeispiels einer Verfahrvorrichtung,
FIG 7 eine Schnittdarstellung eines dritten Ausführungsbeispiels einer Verfahrvorrichtung, und
FIG 8 eine Schnittdarstellung eines vierten Ausführungsbeispiels einer Verfahrvorrichtung.

Einander entsprechende Teile sind in den Figuren mit denselben Bezugszeichen versehen.

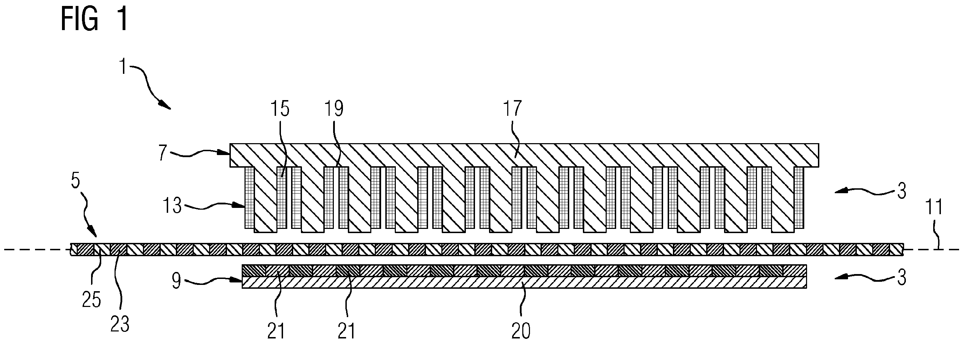

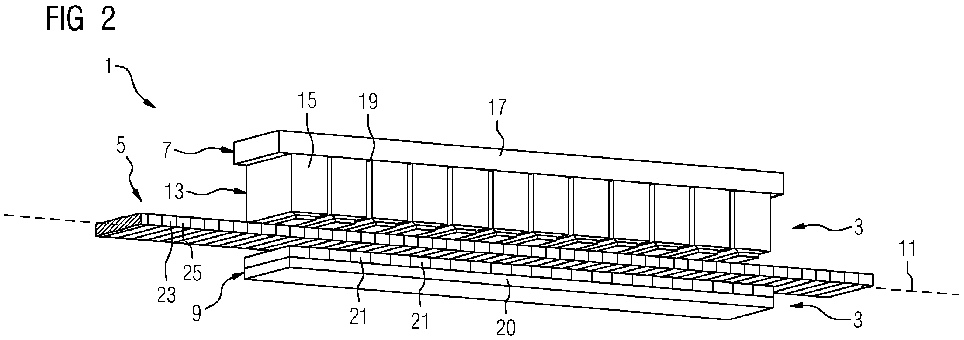

Die Figuren 1 und 2 zeigen ein Ausführungsbeispiel einer linearen elektrischen Maschine 1. Figur 1 zeigt eine Schnittdarstellung der elektrischen Maschine 1. Figur 2 zeigt eine perspektivische Darstellung der elektrischen Maschine 1. Die elektrische Maschine 1 weist ein Primärteil 3 und ein Sekundärteil 5 auf.

Das Primärteil 3 umfasst zwei Aktivteile 7, 9. Ein erstes Aktivteil 7 weist mehrere entlang eines Fahrwegs 11 hintereinander angeordnete Elektromagneten 13 auf, die jeweils eine Spulenwicklung 15 einer elektrischen Spule aufweisen. Das erste Aktivteil 7 weist ferner ein Aktivteilblechpaket 17 mit Nuten 19 auf, wobei durch jede Nut 19 die Spulenwicklungen 15 zweier Elektromagneten 13 verlaufen.

Das zweite Aktivteil 9 weist mehrere entlang des Fahrwegs 11 auf einem Permanentmagnetenträger 20 hintereinander angeordnete Permanentmagneten 21 auf, wobei je zwei einander benachbarte Permanentmagneten 21 einander entgegengesetzte magnetische Polungen aufweisen.

Die beiden Aktivteile 7, 9 sind sich gegenüberliegend und voneinander beabstandet angeordnet. Jedem Elektromagnet 13 des ersten Aktivteils 7 liegen zwei einander benachbarte Permanentmagneten 21 des zweiten Aktivteils 9 gegenüber.

Das Sekundärteil 5 ist zwischen den beiden Aktivteilen 7, 9 des Primärteils 3 und parallel zu den beiden Aktivteilen 7, 9 des Primärteils 3 angeordnet.

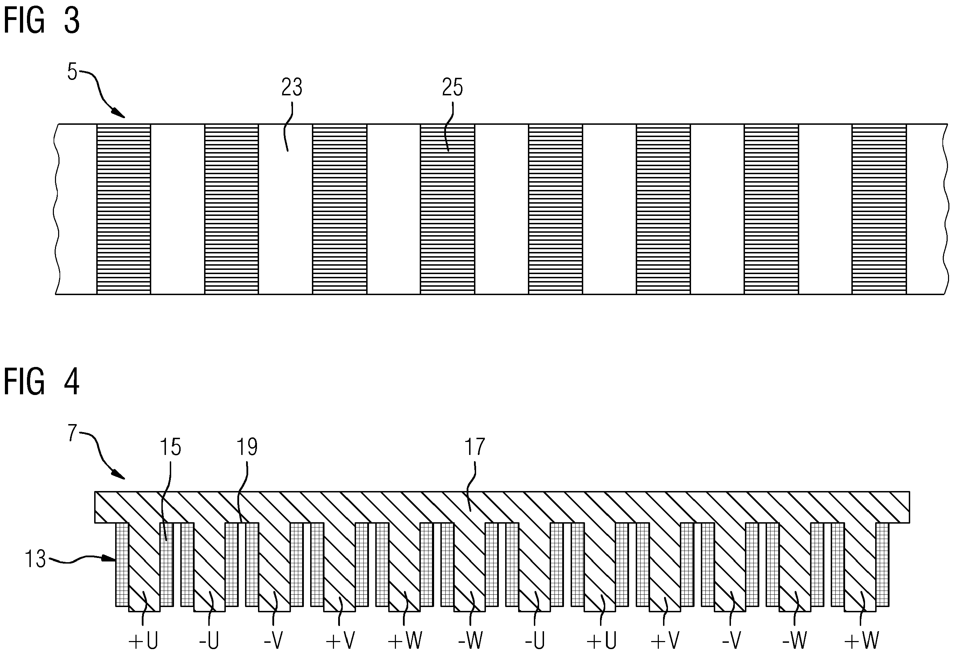

Figur 3 zeigt eine Draufsicht auf das Sekundärteil 5. Das Sekundärteil 5 weist mehrere nichtmagnetische Bereiche 23 und mehrere magnetische Bereiche 25 auf. Die nichtmagnetischen Bereiche 23 und die magnetischen Bereiche 25 sind abwechselnd entlang des Fahrwegs 11 angeordnet, so dass zwischen je zwei benachbarten magnetischen Bereichen 25 ein nichtmagnetischer Bereich 23 angeordnet ist und zwischen je zwei benachbarten nichtmagnetischen Bereichen 23 ein magnetischer Bereich 25 angeordnet ist.

Die nichtmagnetischen Bereiche 23 sind jeweils aus einem nichtmagnetischen Material gefertigt, beispielsweise aus einem keramischen Material oder aus einem faserverstärkten Kunststoff.

Die magnetischen Bereiche 25 sind jeweils zumindest teilweise aus einem magnetischen Material, beispielsweise aus einem weichmagnetischen Material gefertigt. Vorzugsweise weisen die magnetischen Bereiche 25 jeweils ein aus Elektroblechen bestehendes Blechpaket auf.

In dem in den Figuren 1 und 2 gezeigten Ausführungsbeispiel einer linearen elektrischen Maschine 1 weist das erste Aktivteil 7 zwölf Elektromagneten 13 auf und das zweite Aktivteil 9 weist vierundzwanzig Permanentmagneten 21 auf. Das Sekundärteil 5 weist in dem Bereich des Primärteils 3 siebzehn magnetische Bereiche 25 und ebenso viele nichtmagnetische Bereiche 23 auf. In anderen Ausführungsbeispielen kann das Primärteil 3 andere Anzahlen von Elektromagneten 13 und Permanentmagneten 21 aufweisen und das Sekundärteil 5 eine andere Anzahl von magnetischen Bereichen 25 und nichtmagnetischen Bereichen 23 im Bereich des Bereich des Primärteils 3. Ferner kann das erste Aktivteil 7 in anderen Ausführungsbeispielen statt nur ein Aktivteilblechpaket 17 mehrere Aktivteilblechpakete 17 für jeweils einen Permanentmagneten 21 oder mehrere Permanentmagneten 21 aufweisen.

Figur 4 zeigt eine Schnittdarstellung des ersten Aktivteils 7 der in den Figuren 1 und 2 gezeigten linearen elektrischen Maschine 1. Die Elektromagneten 13 des ersten Aktivteils 7 werden mit einem dreiphasigen elektrischen Stromsystem gespeist, wobei jeder Elektromagnet 13 einer Phase U, V, W des Stromsystems zugeordnet ist. Die in Figur 4 gezeigte Zuordnung zu den Phasen U, V, W ist für das in den Figuren 1 und 2 gezeigte Ausführungsbeispiel ausgelegt, bei dem das erste Aktivteil 7 zwölf Elektromagneten 13 aufweist. Bei anderen Ausführungsbeispielen kann eine andere Zuordnung der Elektromagneten 13 zu den Phasen U, V, W vorgesehen sein.

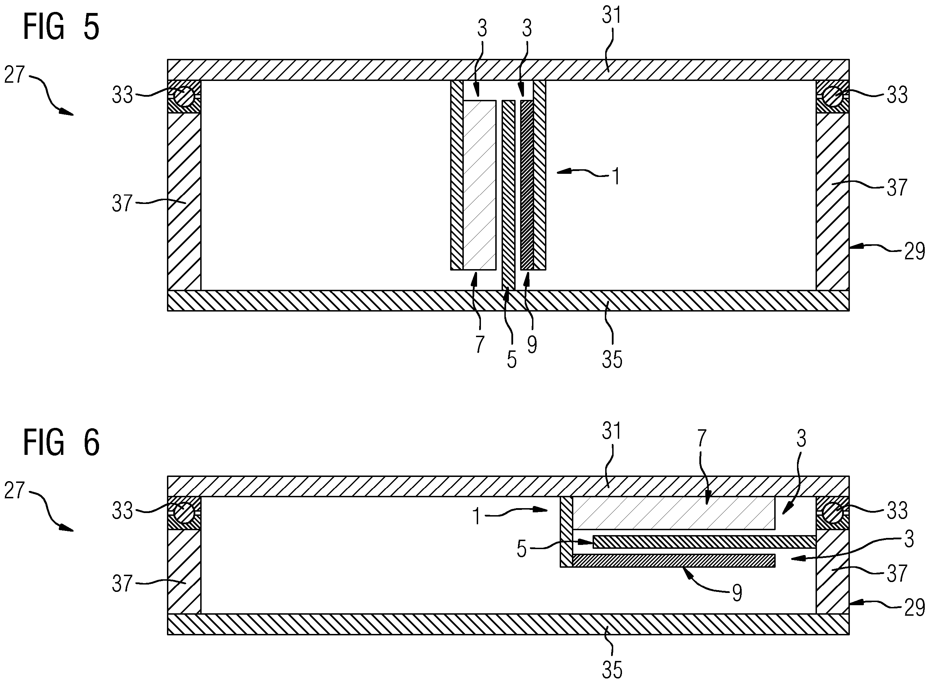

Die Figuren 5 bis 8 zeigen Schnittdarstellungen verschiedener Verfahrvorrichtungen 27 mit linearen elektrischen Maschinen 1. Die linearen elektrischen Maschinen 1 sind jeweils analog zu dem in den Figuren 1 bis 4 dargestellten Ausführungsbeispiel einer linearen elektrischen Maschine 1 ausgebildet. Jede Verfahrvorrichtung 27 weist einen ortsfest angeordneten Stützrahmen 29 und einen auf dem Stützrahmen 29 angeordneten Fahrschlitten 31 auf. Der Fahrschlitten 31 ist über Schlittenlager 33 entlang eines Fahrwegs 11 bewegbar auf dem Stützrahmen 29 gelagert. Der Fahrweg 11 verläuft in den Figuren 5 bis 8 jeweils senkrecht zur Zeichenebene.

Figur 5 zeigt eine Verfahrvorrichtung 27, bei der das Sekundärteil 5 einer linearen elektrischen Maschine 1 an einem Rahmenboden 35 des Stützrahmens 29 angeordnet ist und senkrecht zu dem Rahmenboden 35 verläuft. Die Aktivteile 7, 9 des Primärteils 3 der linearen elektrischen Maschine 1 sind fest mit dem Fahrschlitten 31 verbunden.

Figur 6 zeigt eine Verfahrvorrichtung 27, bei der das Sekundärteil 5 einer linearen elektrischen Maschine 1 an einer Rahmenseite 37 des Stützrahmens 29 angeordnet ist, die sich von dem Rahmenboden 35 zu dem Fahrschlitten 31 erstreckt. Das Sekundärteil 5 verläuft in diesem Fall parallel zu dem Rahmenboden 35. Die Aktivteile 7, 9 des Primärteils 3 der linearen elektrischen Maschine 1 sind fest mit dem Fahrschlitten 31 verbunden.

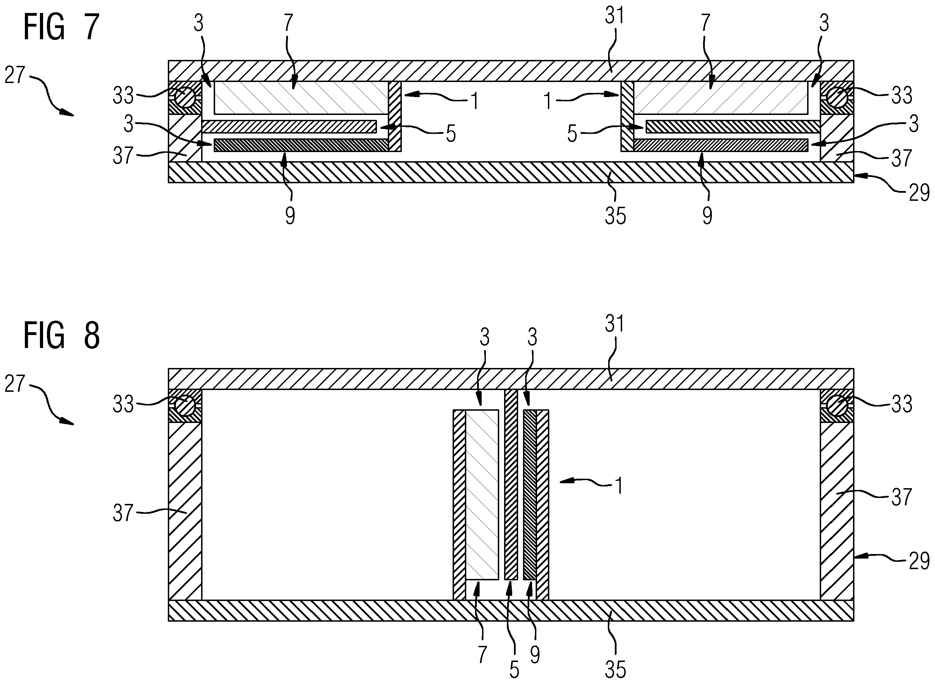

Figur 7 zeigt eine Verfahrvorrichtung 27 mit zwei linearen elektrischen Maschinen 1. Die Sekundärteile 5 der elekrischen Maschinen 1 sind jeweils analog zu der in Figur 6 gezeigten Verfahrvorrichtung 27 an dem Stützrahmen 29 angeordnet, wobei sie an sich gegenüber liegenden Rahmenseiten 37 angeordnet sind. Die Aktivteile 7, 9 der Primärteile 3 der linearen elektrischen Maschinen 1 sind jeweils analog zu der in Figur 6 gezeigten Verfahrvorrichtung 27 fest mit dem Fahrschlitten 31 verbunden.

Figur 8 zeigt eine Verfahrvorrichtung 27, bei der das Sekundärteil 5 einer linearen elektrischen Maschine 1 an dem Fahrschlitten 31 angeordnet ist und senkrecht zu dem Rahmenboden 35 verläuft. Die Aktivteile 7, 9 des Primärteils 3 der linearen elektrischen Maschine 1 sind fest mit dem Rahmenboden 35 des Stützrahmens 29 verbunden. Im Unterschied zu den in den Figuren 5 bis 7 gezeigten Verfahrvorrichtungen 27 ist bei der in Figur 8 gezeigten Verfahrvorrichtung 27 das Primärteil 3 der linearen elektrischen Maschine 1 ortsfest an dem Stützrahmen 29 angeordnet, während das Sekundärteil 5 bewegbar angeordnet ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Primärteil (3) einer linearen elektrischen Maschine (1), das Primärteil (3) umfassend
- ein erstes Aktivteil (7) mit mehreren entlang eines Fahrwegs (11) hintereinander angeordneten Elektromagneten (13), die jeweils eine Spulenwicklung (15) einer elektrischen Spule aufweisen, und
- ein zweites Aktivteil (9) mit mehreren entlang des Fahrwegs (11) hintereinander angeordneten Permanentmagneten (21),
- wobei die beiden Aktivteile (7, 9) sich gegenüberliegend und voneinander beabstandet angeordnet sind.

2. Primärteil (3) nach Anspruch 1,
**dadurch gekennzeichnet, dass** das erste Aktivteil (7) ein Aktivteilblechpaket (17) mit Nuten (19) aufweist, wobei durch jede Nut (19) wenigstens eine Spulenwicklung (15) eines Elektromagneten (13) verläuft.

3. Primärteil (3) nach Anspruch 1 oder 2,
**dadurch gekennzeichnet, dass** je zwei einander benachbarte Permanentmagneten (21) des zweiten Aktivteils (9) einander entgegengesetzte magnetische Polungen aufweisen.

4. Primärteil (3) nach einem der vorhergehenden Ansprüche,
**dadurch gekennzeichnet, dass** jedem Elektromagnet (13) des ersten Aktivteils (7) zwei einander benachbarte Permanentmagneten (21) des zweiten Aktivteils (9) gegenüber liegen.

5. Primärteil (3) nach einem der vorhergehenden Ansprüche,
**dadurch gekennzeichnet, dass** das erste Aktivteil (7) zwölf Elektromagneten (13) aufweist.

6. Primärteil (3) nach einem der vorhergehenden Ansprüche,
**dadurch gekennzeichnet, dass** die Elektromagneten (13) des ersten Aktivteils (7) mit einem dreiphasigen elektrischen Stromsystem gespeist werden, wobei jeder Elektromagnet (13) einer Phase des Stromsystems zugeordnet ist.

7. Lineare elektrische Maschine (1), umfassend
- ein gemäß einem der vorhergehenden Ansprüche ausgebildetes Primärteil (3)
- und ein zwischen den beiden Aktivteilen (7, 9) des Primärteils (3) und parallel zu den beiden Aktivteilen (7, 9) des Primärteils (3) angeordnetes Sekundärteil (5),
- wobei das Sekundärteil (5) mehrere nichtmagnetische Bereiche (23), die jeweils aus einem nichtmagnetischen Material gefertigt sind, und mehrere magnetische Bereiche (25), die jeweils zumindest teilweise aus einem magnetischen Material gefertigt sind, aufweist,
- wobei entlang des Fahrwegs (11) abwechselnd nichtmagnetische Bereiche (23) und magnetische Bereiche (25) angeordnet sind.

8. Lineare elektrische Maschine (1) nach Anspruch 7,
**dadurch gekennzeichnet, dass** die nichtmagnetischen Bereiche (23) des Sekundärteils (5) aus einem keramischen Material gefertigt sind.

9. Lineare elektrische Maschine (1) nach Anspruch 7,
**dadurch gekennzeichnet, dass** die nichtmagnetischen Bereiche (23) des Sekundärteils (5) aus einem faserverstärkten Kunststoff gefertigt sind.

10. Lineare elektrische Maschine (1) nach einem der Ansprüche 7 bis 9,
**dadurch gekennzeichnet, dass** das magnetische Material der magnetischen Bereiche (25) des Sekundärteils (5) jeweils ein weichmagnetisches Material ist.

11. Lineare elektrische Maschine (1) nach einem der Ansprüche 7 bis 10,
**dadurch gekennzeichnet, dass** die magnetischen Bereiche (25) des Sekundärteils (5) jeweils ein aus Elektroblechen bestehendes Blechpaket aufweisen.

12. Lineare elektrische Maschine (1) nach einem der Ansprüche 7 bis 11,
**dadurch gekennzeichnet, dass** das Sekundärteil (5) ortsfest angeordnet ist und die Aktivteile (7, 9) des Primärteils (3) bewegbar angeordnet sind.

13. Lineare elektrische Maschine (1) nach einem der Ansprüche 7 bis 11,
**dadurch gekennzeichnet, dass** die Aktivteile (7, 9) des Primärteils (3) ortsfest angeordnet sind und das Sekundärteil (5) bewegbar angeordnet ist.
